# EUROPÄISCHE PATENTSCHRIFT

(11) **EP 0 399 137 B1**
(45) Veröffentlichungstag und Bekanntmachung des Hinweises auf die Patenterteilung: **13.10.1993**
(21) Anmeldenummer: 90102053.7
(22) Anmeldetag: 02.02.1990
(51) Int. Cl.: A01B 39/16

(54) **An ein Landwirtschaftliches Fahrzeug od.dgl. anbaubare Vorrichtung zur Bodenbearbeitung**
Ground-working tool for attachment to an agricultural vehicle
Outil de travail du sol montable sur un véhicule agricole

(30) Priorität: 24.05.1989 DE 3916852
(43) Veröffentlichungstag der Anmeldung: 28.11.1990
(73) Patentinhaber: Clemens & Co. GmbH, 54516 Wittlich (DE)
(72) Erfinder: Clemens, Bernhard, D-5560 Wittlich (DE)
(74) Vertreter: Schönherr, Wolfgang

(56) Entgegenhaltungen:
- EP-A- 0 171 719
- EP-A- 0 241 747
- DE-A- 2 922 077

## Beschreibung

Die Erfindung betrifft eine an ein landwirtschaftliches Fahrzeug od.dgl. anbaubare Vorrichtung zur Bodenbearbeitung, insb. für Wein-, Obst-, Hopfen- od.dgl. -kulturen, bestehend aus einer an das Fahrzeug anbaubaren, höhenverstellbaren Halterung, in der ein Bodenbearbeitungswerkzeug um eine im wesentlichen in lotrechter Richtung verlaufende Drehachse entgegen der Arbeitsrichtung des Bodenbearbeitungswerkzeuges nach hinten schwenkbar ist, einer an der Halterung angeordneten Antriebsvorrichtung mit Steuervorrichtung zum Schwenken des Bodenbearbeitungswerkzeuges und einem in Arbeitsrichtung vor dem Bodenbearbeitungswerkzeug angeordneten Steuer-Sensor, der zum Schwenken des Bodenbearbeitungswerkzeuges beim Erfassen eines Gegenstandes mit der Steuervorrichtung zusammenwirkt.

Es ist eine Vorrichtung bekannt, bei der als Steuer-Sensor ein Taster vorgesehen ist, der mit Hilfe der Steuervorrichtung und der Antriebsvorrichtung die Schwenkbewegung des Bodenbearbeitungswerkzeuges derart steuert, daß bei Auftreten von Hindernissen, beispielsweise einem Weinstock, das Bodenbearbeitungswerkzeug entgegen der Arbeitsrichtung der Vorrichtung nach hinten geschwenkt und so um das Hindernis herum geführt wird.

Bei dieser bekannten Vorrichtung erfolgt oftmals wegen der rein mechanischen Erfassung der Gegenstände durch den Taster eine zu langsame Schwenkbewegung des Bodenbearbeitungswerkzeuges, so daß es zu Beschädigungen der Kulturen kommt. Da auch der Taster mechanischen Kontakt mit den Kulturen haben muß, kann es darüber hinaus zu Beschädigungen der Kulturen durch den Taster beim Abtasten kommen.

Aus der DE-A-2922077 ist eine Vorrichtung bekannt, bei der das Bodenbearbeitungswerkzeug über ein Kardangelenk mit einem Antrieb des landwirtschaftlichen Fahrzeuges verbunden ist, so daß das Bodenbearbeitungswerkzeug im wesentlichen in Richtung quer zur Fahrtrichtung hin- und hergeschwenkt werden kann. Zur Steuerung des Bodenbearbeitungswerkzeuges ist nach der Beschreibung der DE-A-2922077 eine elektromechanische Steuerung über einen Anschlag, eine mechanische Abtastung oder eine Fotozellensteuerung möglich.

Ausgehend von diesem bekannten Stand der Technik besteht die Aufgabe der Erfindung darin, eine Vorrichtung der eingangs genannten Art derart weiterzubilden, daß ein schnelles Schwenken des Bodenbearbswerkzeuges ohne Beschädigungen der Kulturen gewährleistet ist.

Diese Aufgabe wird dadurch gelöst, daß der Sensor-Taster als Ultra-Schall-Sensor, Infrarot-Sensor, Laser-Sensor, Radar-Sensor od. dgl. zur Erfassung von Gegenständen mit einer Sensorkeule ausgebildet ist und daß der Sensor mit der Drehachse des Bodenbearbeitungswerkzeuges derart verbunden ist, daß die vom Sensor ausgestrahlte Sensorkeule etwa parallel zur Arbeitskante und in Arbeitsrichtung im Abstand vor der Arbeitskante des Bodenbearbeitungswerkzeuges verläuft und die Bewegung des Bodenbearbeitungswerkzeuges mit vollführt.

Durch die Ausbildung eines Sensors mit einer Sensorkeule, die mit dem Bodenbearbeitungswerkzeug geschwenkt wird, kann das Erdreich um die Kultur nahezu vollständig ohne Beschädigung der Kultur auf einfache Weise bearbeitet werden, wobei außerdem eine hohe Arbeitsgeschwindigkeit gegeben ist.

Vorteilhaft ist die Länge der Sensorkeule des Sensors einstellbar. Vorteilhaft ist die Sensorkeule des Sensors etwas länger als die Länge der Arbeitskante des Bodenbearbeitungswerkzeuges ausgebildet. Vorzugsweise ist der Sensor in der Drehachse verstellbar, insb. höhenverstellbar, angeordnet.

Vorzugsweise ist die Antriebsvorrichtung als hydraulisch betätigbarer Druckzylinder ausgebildet. Vorteilhaft weist die Steuervorrichtung ein elektrisch von dem Sensor steuerbares Magnetventil zur Beaufschlagung des Druckzylinders auf.

Bei einer vorteilhaften Ausführungsform ist eine vorgespannte Feder derart mit der Drehachse verbunden, daß das Bodenbearbeitungswerkzeug bei freigegebenem Druckzylinder aus der Arbeitstellung nach hinten geschwenkt ist.

Vorteilhaft ist in Arbeitsstellung des Bodenbearbeitungswerkzeuges die Antriebsvorrichtung über die Steuervorrichtung bis zur Erfassung eines Gegenstandes durch den Sensor blockiert.

Vorteilhaft wirkt ein die Arbeitsstellung des Bodenbearbeitungswerkzeuges erfassender Endschalter, Näherungsschalter od.dgl. mit der Steuervorrichtung zusammen.

Bei einer vorteilhaften Vorrichtung ist zur Höhenverstellung der Halterung ein weiterer Ultra-Schall-Sensor, Infrarot-Sensor, Laser-Sensor, Radar-Sensor od. dgl. zur Steuerung der Höhenverstellung vorgesehen.

Die Erfindung ist in den Zeichnungen beispielhaft dargestellt. Es zeigen:
- Fig. 1 bis 3: die Vorrichtung in Arbeitsrichtung von hinten mit unterschiedlicher Anordnung der Ultra-Schall-Sensoren
- Fig. 4 bis 7: die Vorrichtung in Draufsicht in unterschiedlichen Betriebsstellungen.

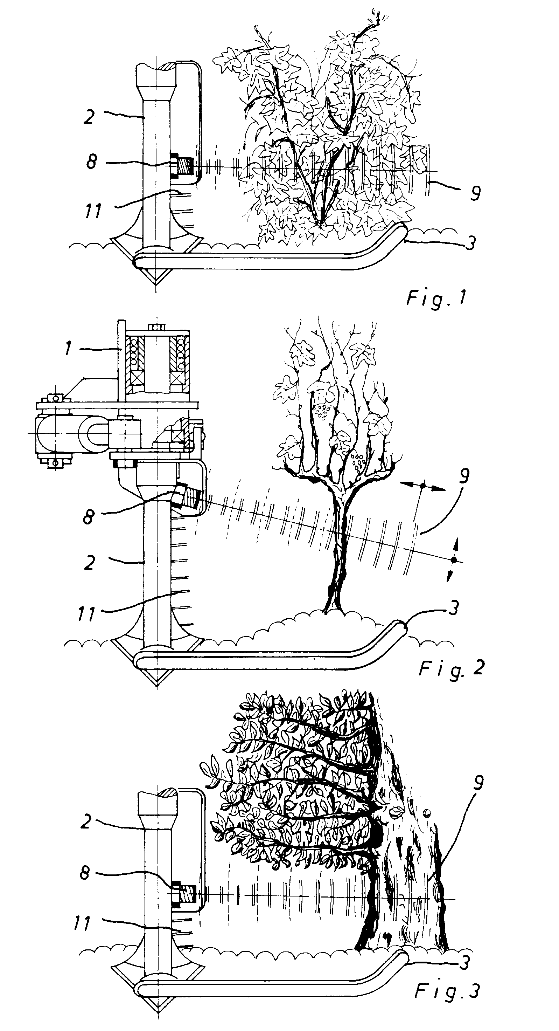

Wie die Fig. 1 bis 7 zeigen, ist in einer Halterung 1 eine in lotrechter Richtung verlaufende Drehachse 2 drehbar angeordnet, die an ihrem unteren Ende ein im wesentlichen in waagerechter Richtung verlaufendes Bodenbearbeitungswerkzeug 3 trägt. Die Halterung 1 ist an ein nicht dargestelltes landwirtschaftliches Fahrzeug od.dgl. anbaubar.

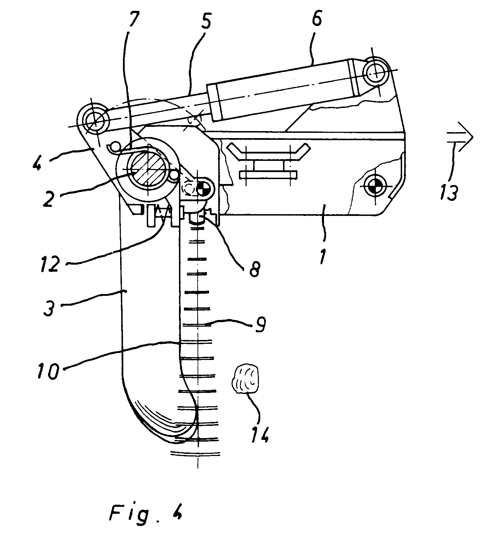

Wie die Fig. 4 bis 7 zeigen, ist die Drehachse 2 über einen Hebel 4 gelenkig mit der Kolbenstange 5 eines Druckzylinders 6 verbunden. Eine vorgespannte Feder ist 7 derart mit der Drehachse 2 verbunden, daß das Bodenbearbeitungswerkzeug 3 bei freigegebenem Druckzylinder 6 aus der Arbeitstellung nach hinten geschwenkt ist.

Wie die Figuren weiter zeigen, ist mit der Drehachse 2 ein Ultra-Schall-Sensor 8 verbunden, der zur Erfassung von Gegenständen eine mit 9 bezeichnete Sensorkeule aussendet, die parallel zur Arbeitskante und in Arbeitsrichtung im Abstand vor der Arbeitskante des Bodenbearbeitungswerkzeuges verläuft. Die Länge der mit 9 bezeichneten Ultraschallkeule ist etwas größer als die Länge des Bodenbearbeitungswerkzeuges 3.

Wie die Fig. 1 bis 3 zeigen, ist der Ultra-Schall-Sensor 8 höhenverstellbar und im Neigungswinkel verstellbar an der Drehachse 2 angeordnet. Damit kann die Vorrichtung an die zu bearbeitende Kultur angepaßt werden.

Die Fig. 1 bis 3 zeigen ferner, daß ein weiterer Ultra-Schall-Sensor eine in lotrechter Richtung verlaufende, mit 11 bezeichnete Sensorkeule aussendet, die über nichtgezeigte Antriebsmittel die Höheneinstellungsvorrichtung und damit die Arbeitstiefe des Bodenbearbeitungswerkzeuges 3 steuert.

Anstelle der Ultra-Schall-Sensoren können auch Infrarot-Sensoren, Laser-Sensoren, Radar-Sensoren od. dgl. vorgesehen sein.

Der Ultra-Schall-Sensor 8 hat einen Sender, der Ultraschallimpulse aussendet, und einen Empfänger, der das von einem Hindernis erzeugte Echo dieser Schallimpulse empfängt und dies mit einem Ausganssignal anzeigt. Ein Hindernis wird erkannt, wenn der Empfänger ein Ausganssignal nach Ausschalten des Senders liefert und dieses Signal innerhalb der vorgegebenen Laufzeit erscheint. Die eingestellte Laufzeit ist ein Maß für die wirksame Keulenllänge 9 des Ultra-Schall-Sensors 8.

Der Ultra-Schall-Sensor 8 wirkt mit seinen elektrischen Ausgangssignalen auf eine nicht dargestellte Steuervorrichtung zur Steuerung des Druckzylinders 6. Gleichfalls wirkt ein Endschalter 12, der die Arbeitsstellung des Bodenbearbeitungswerkzeuges 3 erfaßt, auf die nicht dargestellte Steuervorrichtung des Druckzylinders 6.

In der in Fig. 4 dargestellten Arbeitsstellung des Bodenbearbeitungswerkzeuges 3 wird durch den Endschalter 12 die nicht dargestellte Steuervorrichtung derart gesteuert, daß die Ein- und Auslässe des Druckzylinders 6 gesperrt sind. Dadurch wird der Kolben der Kolbenstange 5 im Druckzylinder blockiert, so daß über die Kolbenstange und den Hebel 4 das Bodenbearbeitungswerkzeug 3 fest in der Arbeitsstellung gehalten ist.

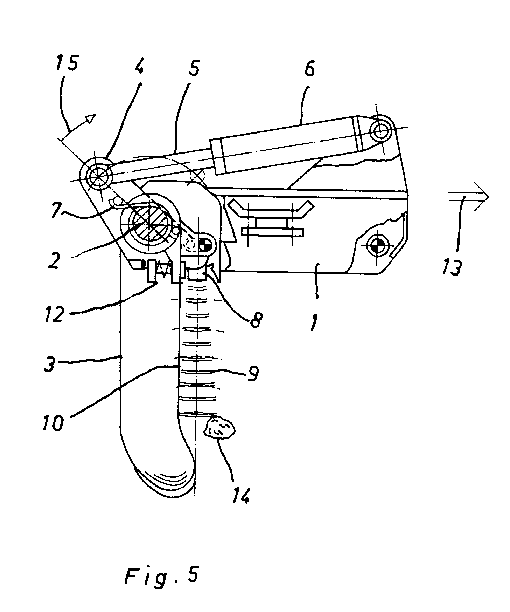

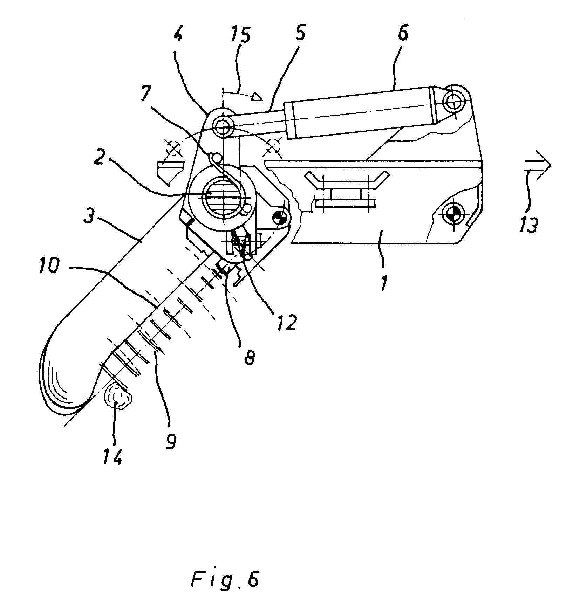

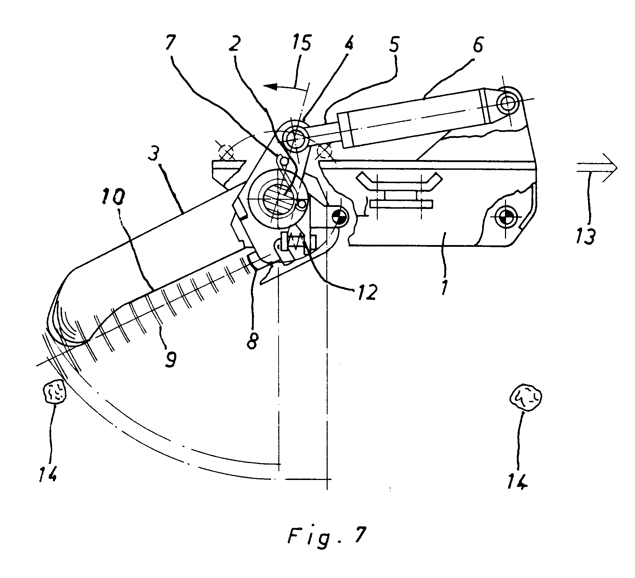

Wird die Vorrichtung nunmehr in der mit 13 bezeichneten Arbeitsrichtung bewegt, so erfaßt die mit 9 bezeichnete Sensorkeule den mit 14 bezeichneten Stamm eines Weinstockes od.dgl., wie dies in Fig. 5 dargestellt ist. Über den Ultra-Schall-Sensor 8 wird dadurch die Wirkung des Endschalters 12 auf die Steuereinrichtung aufgehoben und über die Steuereinrichtung der Druckzylinder 6 freigegeben, so daß die auf das Bodenbearbeitungswerkzeug 3 aufgrund der Vorwärtsbewegung wirkende Kraft des Erdreiches und der Feder 7 das Bodenbearbeitungswerkzeug 3 entgegen der Arbeitsrichtung nach hinten schwenkt, wie dies in den Fig. 6 und 7 dargestellt ist.

Verliert die Sensorkeule 9 des Ultra-Schall-Sensors 8 den Kontakt mit dem Stamm 14, wie es in Fig. 7 dargestellt ist, so wird über die Steuervorrichtung der Druckzylinder 6 beaufschlagt, so daß der Druckzylinder 6 über seine Kolbenstange 5 und den Hebel 4 das Bodenbearbeitungswerkzeuges 3 in Richtung des mit 15 bezeichneten Pfeiles in die Arbeitsstellung nach Fig. 4 zurückschwenkt.

In vorteilhafter Weise ist es auch möglich, mit Hilfe eines zweiten Druckzylinders bzw. eines doppeltwirkenden Druckzylinders die Schwenkbewegung des Bodenbearbeitungswerkzeuges 3 in Abhängigkeit von dem Ultra-Schall-Sensor 8 über die Steuereinrichtung in beiden Schwenkrichtungen zu steuern.

## Patentansprüche

1. An ein landwirtschaftliches Fahrzeug od.dgl. anbaubare Vorrichtung zur Bodenbearbeitung, insb. für Wein-, Obst-, Hopfen- od.dgl. -kulturen, bestehend aus einer am Fahrzeug anbaubaren höhenverstellbaren Halterung (1), in der ein Bodenbearbeitungswerkzeug (3) um eine im wesentlichen in lotrechter Richtung verlaufende Drehachse (2) entgegen der Arbeitsrichtung (13) des Bodenbearbeitungswerkzeuges nach hinten schwenkbar ist, einer an der Halterung angeordneten Antriebsvorrichtung (4, 5, 6) mit Steuervorrichtung zum Schwenken des Bodenbearbeitungswerkzeuges und einem in Arbeitsrichtung vor dem Bodenbearbeitungswerkzeug angeordneten Steuer-Sensor (8), der zum Schwenken des Bodenbearbeitungswerkzeuges bei Erfassen eines Gegenstandes mit der Steuervorrichtung zusammenwirkt, dadurch gekennzeichnet, daß der Steuer-Sensor (8) als Ultra-Schall-Sensor, Infrarot-Sensor, Laser-Sensor, Radar-Sensor od. dgl. zum Erfassen von Gegenständen mit einer Sensorkeule (9) ausgebildet ist und daß der Sensor mit der Drehachse (2) des Bodenbearbeitungswerkzeuges (3) derart verbunden ist, daß die vom Sensor ausgestrahlte Sensorkeule etwa parallel zur Arbeitskante (10) und in Arbeitsrichtung im Abstand vor der Arbeitskante (10) des Bodenbearbeitungswerkzeuges verläuft und die Bewegung des Bodenbearbeitungswerkzeuges mit vollführt.

2. Vorrichtung nach Anspruch 1, dadurch gekennzeichnet, daß die Länge der Sensorkeule (9) des Sensors (8) einstellbar ist.

3. Vorrichtung nach Anspruch 1 oder 2, dadurch gekennzeichnet, daß die Sensorkeule (9) des Sensors (8) etwas länger als die Länge der Arbeitskante (10) des Bodenbearbeitungswerkzeuges (3) ist.

4. Vorrichtung nach einem der Ansprüche 1 bis 3, dadurch gekennzeichnet, daß der Sensor (8) an der Drehachse (2) verstellbar, insb. höhenverstellbar, angeordnet ist.

5. Vorrichtung nach einen der Ansprüche 1 bis 4, dadurch gekennzeichnet, daß die Antriebvorrichtung als hydraulisch betätigbarer Druckzylinder (6) ausgebildet ist.

6. Vorrrichtung nach Anspruch 5, dadurch gekennzeichnet, daß die Steuervorrichtung ein elektrisch vom Sensor (8) steuerbares Magnetventil zur Beaufschlagung des Druckzylinders (6) aufweist.

7. Vorrichtung nach einen der Ansprüche 1 bis 6, dadurch gekennzeichnet, daß eine vorgespannte Feder (7) derart mit der Drehachse (2) verbunden ist, daß das Bodenbearbeitungswerkzeug (3) bei freigegebenem Druckzylinder (6) aus der Arbeitstellung nach hinten geschwenkt ist.

8. Vorrichtung nach einen der Ansprüche 1 bis 7, dadurch gekennzeichnet, daß in Arbeitsstellung des Bodenbearbeitungswerkzeuges (3) die Antriebsvorrichtung (6) über die Steuervorrichtung bis zur Erfassung eines Gegenstandes (14) durch den Sensor (8) blockiert ist.

9. Vorrichtung nach Anspruch 8, dadurch gekennzeichnet, daß ein die Arbeitsstellung des Bodenbearbeitungswerkzeuges (3) erfassender Endschalter (12), Näherungsschalter od.dgl. mit der Steuervorrichtung zusammenwirkt.

10. Vorrichtung nach einem der Ansprüche 1 bis 9, dadurch gekennzeichnet, daß zur Hohenverstellung der Halterung ein weiterer Ultra-Schall-Sensor, Infrarot-Sensor, Laser-Sensor, Radar-Sensor od.dgl. zur Steuerung der Höhenverstellung vorgesehen ist.

## Claims

1. Ground-cultivating device for attachment to an agricultural vehicle or the like, in particular for grape, fruit, and hop cultures or the like, comprising a vehicle-mounted height adjustable support (1), in which a ground-cultivating tool (3) is rearwardly pivotable against the working direction (13) of the ground-cultivating tool around a substantially perpendicularly extending rotary axis (2), a drive (4, 5, 6) with control device for pivoting the ground-cultivating tool mounted on the support, and in front of the ground-cultivating tool, as seen in the working direction, a control sensor (8) which co-operates with the control device for the purpose of pivoting the ground-cultivating tool when detecting an object, **characterised in that** the control sensor (8) is an ultra-sound sensor, infrared sensor, laser sensor, radar sensor or the like which is provided with a sensor lobe (9) for detecting objects, and that the sensor is connected to the rotary axis (2) of the ground-cultivating tool (3) in such a way that the sensor lobe transmitted by the sensor extends virtually in parallel with the work edge (10̸) and in the working direction at a distance from the work edge (10̸) of the ground-cultivating tool and fully executes the movement of the ground-cultivating tool.

2. Device according to claim 1, **characterised in that** the length of the sensor lobe (9) of the sensor (8) is adjustable.

3. Device according to claim 1 or 2, **characterised in that** the sensor lobe (9) of the sensor (8) is slightly longer than the length of the work edge (10̸) of the ground-cultivating tool (3).

4. Device according to claims 1 to 3, **characterised in that** the sensor (8) is arranged to be adjustable on the rotary axis (2), in particular height adjustable.

5. Device according to one of claims 1 to 4, **characterised in that** the drive unit is a hydraulically actuated pressure cylinder (6).

6. Device according to claim 5, **characterised in that** the control device comprises a magnetic valve, which is electrically controlled by a sensor (8), for operating the pressure cylinder (6).

7. Device according to one of claims 1 to 6, **characterised in that** a pretensioned spring (7) is connected with the rotary axis (2) in such a way that the ground-cultivating tool (3) is pivoting from the working position rearwards when the pressure cylinder (6) is released.

8. Device according to one of claims 1 to 7, **characterised in that** when the ground-cultivating tool (3) is in its work position the drive unit (6) is blocked by the sensor (8) via the control device until an object (14) is detected.

9. Device according to claim 8, **characterised in that** an end switch (12), approach switch or the like, which detects the work position of the ground-cultivating tool (3), co-operates with the control device.

10. Device according to one of claims 1 to 9, **characterised in that** for the height adjustment of the support a further ultra-sound sensor, infrared sensor, laser sensor, radar sensor or the like is provided for controlling the height adjustment.

## Revendications

1. Outil de travail du sol pour véhicule agricole, ou analogue, en particulier pour la culture de la vigne, des fruits, du houblon ou analogue, constitué par un support (1) dont la position en hauteur est réglable, qui est montable sur le véhicule et grâce auquel un outil de travail du sol (3) est monté basculant vers l'arrière par rapport au sens d'avance (13) du travail, autour d'un axe de pivotement (2) s'étendant sensiblement en direction verticale, un dispositif d'actionnement (4, 5, 6) pourvu d'un système de commande pour le pivotement de l'outil de travail du sol, et un détecteur pilote (8) disposé devant l'outil de travail du sol par rapport au sens d'avance du travail qui coopère avec ledit système de commande pour le basculement de l'outil de travail du sol lors de la détection d'un obstacle, caractérisé en ce que le détecteur pilote (8) est réalisé sous la forme d'un détecteur à ultra-sons, infra-rouge, laser, radar, ou analogue pour la détection d'obstacles grâce à un cône de détection (9) et en ce que le détecteur est relié à l'axe de pivotement (2) de l'outil de travail du sol (3) de telle façon que le cône de détection émis par le détecteur soit disposé sensiblement parallèlement au bord actif (10) de l'outil de travail et devant celui-ci dans le sens de son avance, contrôlant le mouvement dudit outil de travail du sol.

2. Dispositif selon la revendication 1, caractérisé en ce que la longueur du cône de détection (9) du détecteur (8) est réglable.

3. Dispositif selon l'une quelconque des revendications 1 ou 2, caractérisé en ce que le cône de détection (9) du détecteur (8) est légèrement plus long que la longueur du bord actif (10) de l'outil de travail du sol (3).

4. Dispositif selon l'une quelconque des revendications 1 à 3, caractérisé en ce que le détecteur (8) est disposé de manière réglable, en particulier en hauteur, sur l'axe de pivotement (2).

5. Dispositif selon l'une quelconque des revendications 1 à 4, carcatérisé en ce que le dispositif d'actionnement est réalisé sous la forme d'un vérin (6) actionné hydrauliquement.

6. Dispositif selon la revendication 5, caractérisé en ce que le dispositif de commande comporte une vanne magnétique commandée électriquement par le détecteur (8) pour la mise sous pression du vérin (6).

7. Dispositif selon l'une quelconque des revendications 1 à 6, caractérisé en ce qu'un ressort (7) précontraint est lié de telle manière à l'axe de pivotement (2) que l'outil de travail du sol (3) est ramené vers l'arrière à partir de sa position de travail lorsque le vérin (6) est libéré.

8. Dispositif selon l'une quelconque des revendications 1 à 7, caractérisé en ce qu'en position de travail de l'outil de travail du sol (3), le dispositif d'actionnement (6) est bloqué par le dispositif de commande jusqu'à la détection d'un obstacle (14) par le détecteur (8).

9. Dispositif selon la revendication 8, caractérisé en ce qu'un interrupteur de fin de course (12), un interrupteur de proximité, ou analogue, détectant la position de travail de l'outil de travail du sol (3) coopère avec le dispositif de commande.

10. Dispositif selon l'une quelconque des revendications 1 à 9, caractérisé en ce qu'en vue du déplacement en hauteur du support, il est prévu un détecteur à ultra-sons, infra-rouge, laser, radar ou analogue, supplémentaire pour la commande dudit déplacement en hauteur.
